# EUROPÄISCHE PATENTSCHRIFT

(11) **EP 1 565 064 B1**
(45) Veröffentlichungstag und Bekanntmachung des Hinweises auf die Patenterteilung: **27.09.2006**
(21) Anmeldenummer: 02790259.2
(22) Anmeldetag: 25.11.2002
(51) Int. Cl.: A23G 3/26, B05B 13/02, B05C 3/08

(54) **BESCHICHTUNGS-VORRICHTUNG MIT INTEGRIERTER REINIGUNGSEINRICHTUNG**
COATING DEVICE WITH INTEGRATED CLEANING DEVICE
DISPOSITIF DE REVETEMENT A SYSTEME DE NETTOYAGE INTEGRE

(43) Veröffentlichungstag der Anmeldung: 24.08.2005
(73) Patentinhaber: Driam Anlagenbau GmbH, 88097 Eriskirch (DE)
(72) Erfinder: NOHYNEK, Oliver, CH-9000 St. Gallen (CH)
(74) Vertreter: Kiessling, Christian
(86) Internationale Anmeldenummer: PCT/DE2002/004324
(87) Internationale Veröffentlichungsnummer: WO 2004/047546

(56) Entgegenhaltungen:
- EP-A- 0 327 789
- EP-A- 0 545 065
- DE-A- 10 024 407
- FR-A- 2 388 592
- US-A- 3 484 360
- US-A- 3 827 182
- US-A- 3 934 545
- US-A- 3 944 189

## Beschreibung

Aus US 2 739 624 ist eine Beschichtungs-Vorrichtung, gemäß der Präambel des Anspruchs 1, zum Beschichten beispielsweise linsen- oder kornförmiger Grundkörper, mit einer um eine horizontale Achse drehbar gelagerten Trommel zur Aufnahme der Grundkörper während eines Beladungsvorgangs, einer Beschickungseinrichtung zum Einfüllen der Grundkörper in die Trommel, einer verschließbaren Öffnung der Trommel zur Aufnahme der unbeschichteten Grundkörper in die Trommel und zur Abgabe der fertig beschichteten Grundkörper aus der Trommel sowie einer innerhalb der Trommel angeordneten Sprüheinrichtung zum Beschichten der Grundkörper, wobei unterhalb der Trommel eine Entladeeinrichtung zum Abtransport der fertig beschichteten Grundkörper vorgesehen ist, wobei zwischen der Entladeeinrichtung und der Trommel eine reziprozierbar angeordnete Abschirmwand vorgesehen ist, die aus einer die Entladeeinrichtung abschirmenden ersten Position in eine die Entladeeinrichtung freigebende zweite Position und zurück bewegbar ist, bekannt.

Allgemein werden Beschichtungs-Vorrichtungen der eingangs genannten Art einerseits verwendet, um zu festen Einheiten oder Kernen komprimierte pharmazeutische Produkte mit einer oder mehr Hüllen zu umgeben, die beispielsweise ein Herunterschlucken seitens einer die Produkte konsumierenden Person erleichtern. Im Falle von Dragees besteht diese Hülle im Wesentlichen aus Zucker. Im Falle anderer Tabletten kann diese Hülle auch aus einem auf der Grundlage von Kunststoffen basierenden Film gebildet sein. Andererseits werden die bekannten Vorrichtungen in der Süßwarenindustrie verwendet, um Kerne unterschiedlichster Beschaffenheit mit Schokolade und/oder Zucker oder anderen Süßstoffen zu umgeben.

Der Betrieb herkömmlicher Beschichtungs-Vorrichtungen ist regelmäßig in vier Operationsabschnitte unterteilt. Diese beinhalten ein
1. Beladen der Trommel
2. Beschichten der Grundkörper
3. Entladen und Abtransport der Grundkörper
4. Reinigen der Trommel

Der Zeitraum für ein Beschichten der Grundkörper ist abhängig von der Beschaffenheit und der Dicke einer aufzutragenden Beschichtung und insofern für einen bestimmten Beschichtungsvorgang fest vorgegeben. Der für ein Reinigen der Trommel in Anspruch genommene Zeitraum nimmt je nach Beschichtungsmaterial in der Regel mehrere Minuten in Anspruch und auch der Zeitraum einer Entladung der Trommel mit anschließendem Abtransport der fertig beschichteten Grundkörper ist relativ kurz verglichen mit dem Zeitraum einer Beschichtung der Grundkörper. Dennoch ist der Betrieb der herkömmlichen Vorrichtungen noch nicht optimiert, da insbesondere die beiden letzten Operationsabschnitte jeweils nur zeitlich hintereinander ausführbar sind.

Die bekannten Beschichtungs-Vorrichtungen weisen demnach den Nachteil auf, dass ein zeitlich und damit wirtschaftlich optimierter Betrieb noch nicht ermöglicht ist.

Aufgabe der Erfindung ist es deshalb, eine Beschichtungs-Vorrichtung gemäß des Anspruchs 1 zu schaffen, mittels derer ein zeitlich paralleler Berieb in den Operationsabschnitten des Entladens und Reinigens ermöglicht ist.

Für eine Beschichtungs-Vorrichtung der eingangs genannten Art wird diese Aufgabe dadurch gelöst, dass die Abschirmwand als Teil eines Zylindermantels ausgebildet ist und der Radius des Zylindermantels so bemessen ist, dass die Abschirmwand die Trommel in möglichst geringem Abstand umschließt, wobei die Abschirmwand zum Zweck einer Führung mit mindestens einer rollengelagerten Führungsschiene fest verbunden ist.

Bevorzugte Ausführungsformen der Erfindung sind Gegenstand der Unteransprüche.

Bei der erfindungsgemäßen Vorrichtung wird durch die Merkmalskombination, dass die Abschirmwand als Teil eines Zylindermantels ausgebildet ist und der Radius des Zylindermantels so bemessen ist, dass die Abschirmwand die Trommel in möglichst geringem Abstand umschließt, wobei die Abschirmwand zum Zweck einer Führung mit mindestens einer rollengelagerten Führungsschiene fest verbunden ist, erreicht, dass im Zusammenwirken mit der Abschirmung der Trommel gegenüber der Entladeeinrichtung ein Reinigungsvorgang der Trommel unter Vermeidung einer Verunreinigungsgefahr der fertigen Grundkörper zeitgleich mit dem Vorgang des Abtransportes der beschichteten Grundkörper aus der Entladeeinrichtung einsetzen kann oder zumindest schon zu einem Zeitpunkt einsetzen kann, in dem der Vorgang des Abtransportes der beschichteten Grundkörper aus der Entladeeinrichtung noch andauert. Dies ist um so bedeutender, als in Beschichtungs-Vorrichtungen gemäß dem Stand der Technik heutzutage unter anderem auch sehr großvolumige Trommeln mit einem Fassungsvermögen von einer Million und mehr Grundkörpern Verwendung finden und die Grundkörper bei einem Entladen der Trommel in die obere, breite Öffnung eines Trichters fallen, im Bereich dessen unterer, schmaler Öffnung ein Transportband für einen steuerbaren Abtransport der Grundkörper vorgesehen ist, wobei der Zeitraum eines vollständigen Abtransportes aller Grundkörper in der Regel auch mehrere Minuten beträgt.

Gemäß einer ersten bevorzugten Ausführungsform der erfindungsgemäßen Vorrichtung ist vorgesehen, dass die Abschirmwand an ihren gebogenen Enden vorzugsweise jeweils Ansatzstirnflächen aufweist, um eine Verunreinigung der beschichteten Grundkörper sicher auszuschließen.

Gemäß einer anderen bevorzugten Ausführungsform der erfindungsgemäßen Vorrichtung ist vorgesehen, dass die mindestens eine Führungsschiene vorzugsweise so lang bemessen ist, dass die Abschirmwand um etwa 90° schwenkbar ist. Vorzugsweise sind dabei zwei Führungsschienen vorgesehen, wobei eine Führungsschiene jeweils mit einer Ansatzstirnfläche der Abschirmwand verbunden ist. Ein oder mehr Rollenlager zum reziprozierbaren geführten Verschieben der Führungsschienen der Abschirmwand sind dabei aus Stabilitätserwägungen vorzugsweise an der Entladeeinrichtung befestigt.

Die mindestens eine Führungsschiene der Abschirmwand der erfindungsgemäßen Vorrichtung ist im Querschnitt vorzugsweise rund ausgebildet, wobei die Rollen eines Rollenlagers im Querschnitt mit einem entsprechenden negativen Krümmungsradius konkav ausgebildet sind, um eine eingreifende sichere Führung zu gewährleisten.

Gemäß einer weiteren bevorzugten Ausführungsform der erfindungsgemäßen Vorrichtung ist vorgesehen, dass die Abschirmwand zum Zweck eines Antriebes für eine reziprozierbare Verschiebung mit einer gebogenen Zahnstange verbunden ist, die mit einem motorgetriebenen Zahnrad zusammenwirkt. Die gebogene Zahnstange ist dabei vorzugsweise mit der Außenfläche des Zylindermantels verbunden. Aus Stabilitätserwägungen ist das Zahnrad ebenfalls an der Entladeeinrichtung befestigt.

Gemäß weiterer bevorzugter Ausführungsformen der erfindungsgemäßen Vorrichtung ist vorgesehen, dass die Sprüheinrichtung für Reinigungsflüssigkeit in der Nachbarschaft der Sprüheinrichtung zum Beschichten der Grundkörper angeordnet ist. Die Entladeeinrichtung enthält vorzugsweise eine trichterförmige Wanne, wobei unterhalb der trichterförmigen Wanne vorzugsweise ein Transportband für einen steuerbaren Abtransport der Grundkörper vorgesehen ist.

Mittels der erfindungsgemäßen Vorrichtung sind eine Mehrzahl iterativer Beschichtungsvorgänge mit jeweils unterschiedlichen Beschichtungsmaterialien sukzessiv hintereinander vornehmbar.

Die erfindungsgemäße Vorrichtung wird im Folgenden anhand einer bevorzugten Ausführungsform erläutert, die in den Figuren der Zeichnung dargestellt ist. Darin zeigen:
- Fig. 1: eine erste bevorzugte Ausführungsform der erfindungsgemäßen Vorrichtung in einer Seitenansicht;
- Fig. 2: die in Fig. 1 dargestellte bevorzugte Ausführungsform der erfindungsgemäßen Vorrichtung ohne Trommel in einer Ansicht von schräg oben;
- Fig. 3: ein Detail der in Fig. 2 dargestellten bevorzugten Ausführungsform der erfindungsgemäßen Vorrichtung in einer Querschnittsansicht;
- Fig. 4: ein weiteres Detail der in Fig. 2 dargestellten bevorzugten Ausführungsform der erfindungsgemäßen Vorrichtung in einer Seitenansicht;
- Fig. 5: ein weiteres Detail der in Fig. 2 dargestellten bevorzugten Ausführungsform der erfindungsgemäßen Vorrichtung in einer Seitenansicht.

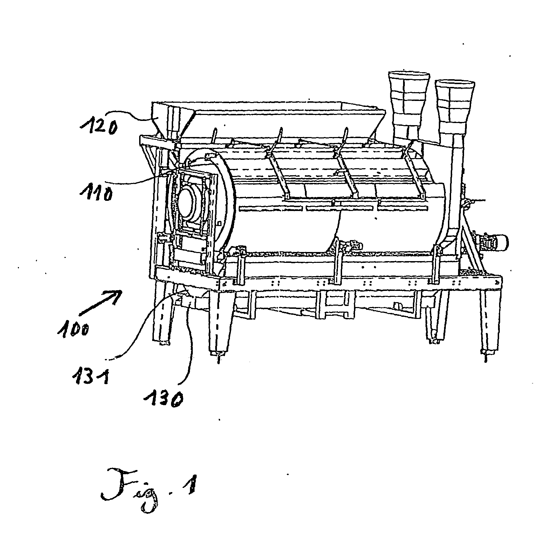

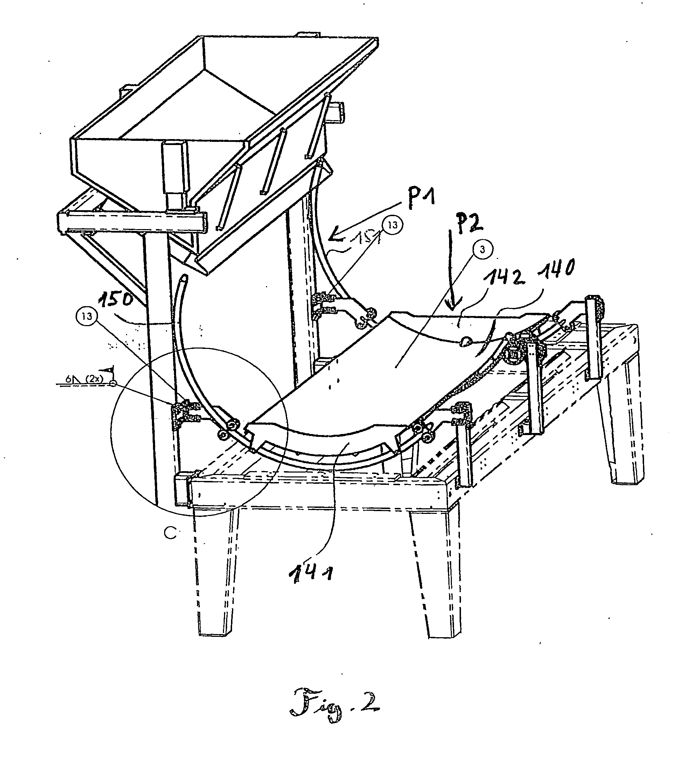

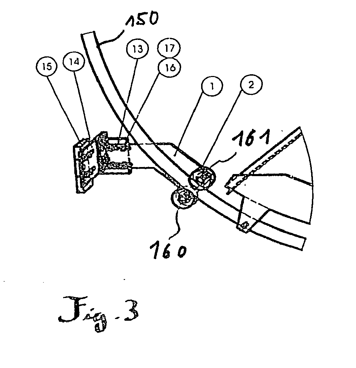

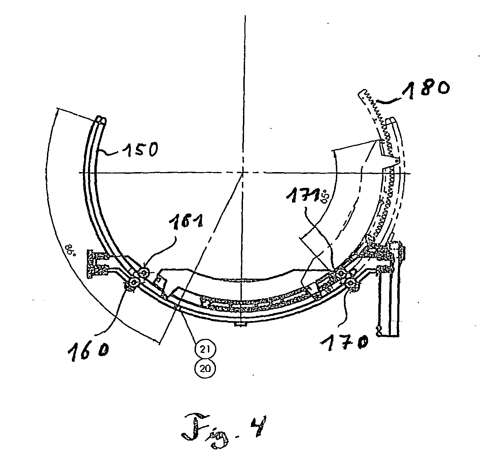

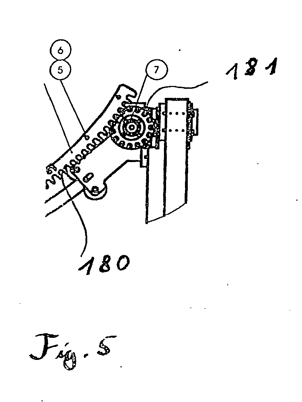

Die in den Figuren 1 bis 5 dargestellte erfindungsgemäße Beschichtungs-Vorrichtung 100 zum Beschichten von Grundkörpern enthält eine um eine horizontale Achse drehbar gelagerte Trommel 110 zur Aufnahme der Grundkörper, eine Beschickungseinrichtung 120 zum Einfüllen der Grundkörper in die Trommel 110, eine verschließbaren Öffnung der Trommel zur Aufnahme der unbeschichteten Grundkörper in die Trommel 110 und zur Abgabe der fertig beschichteten Grundkörper aus der Trommel 110 sowie eine innerhalb der Trommel 110 angeordnete Sprüheinrichtung zum Beschichten der Grundkörper mit einer Beschichtungsflüssigkeit, wobei unterhalb der Trommel 110 eine Entladeeinrichtung 130 zum Abtransport der fertig beschichteten Grundkörper vorgesehen ist, und erfindungswesentlich zwischen der Entladeeinrichtung 130 und der Trommel 110 eine reziprozierbar angeordnete Abschirmwand 140 vorgesehen ist, die aus einer die Entladeeinrichtung 130 abschirmenden ersten Position P1 in eine die Entladeeinrichtung 130 freigebende zweite Position P2 und zurück bewegbar ist.

Die Abschirmwand 140 ist als Zylindermantelteil ausgebildet, wobei der Radius des Zylindermantelteils so bemessen ist, dass die Abschirmwand 140 die Trommel 110 in möglichst geringem Abstand umschließt. Die Abschirmwand 1 ist an ihren gebogenen Enden jeweils mit Ansatzstirnflächen 141, 142 versehen. Des weiteren ist die Abschirmwand 140 zum Zweck einer Führung mit zwei rollengelagerten Führungsschienen 150, 151 fest verbunden, wobei die beiden Führungsschienen 150, 151 so lang bemessen sind, dass die Abschirmwand 140 um etwa 90° schwenkbar ist. Die Führungsschienen 140, 151 sind dabei mit den Ansatzstirnflächen 141, 142 der Abschirmwand 140 fest verbunden.

Eine Mehrzahl von Rollen [160, 161; 170, 171] ; [160', 161'; 170', 171'] entsprechender Rollenlager ist zum reziprozierbaren geführten Verschieben der beiden Führungsschienen 150, 151 der Abschirmwand 140 an der Entladeeinrichtung befestigt. Die Führungsschienen 150, 151 sind im Querschnitt kreisförmig ausgebildet, wobei die entsprechenden Oberflächen der daran angrenzenden Rollen [160, 161; 170, 171]; [160', 161'; 170', 171'] eines Rollenlagers bei entsprechend angepasstem negativen Krümmungsradius konkav ausgebildet sind.

Die Abschirmwand 140 ist zum Zweck eines Antriebes für eine reziprozierbare Verschiebung mit einer gebogenen Zahnstange 180 verbunden, die mit einem motorgetriebenen Zahnrad 181 zusammenwirkt. Die gebogene Zahnstange 180 ist dabei mit der Außenfläche der als Zylindermantelteil ausgebildeten Abschirmwand 140 verbunden, und das Zahnrad 181 ist an der Entladeeinrichtung 130 befestigt.

Gemäß einer allgemein vorteilhaften Bauform der erfindungsgemäßen Vorrichtung ist die Sprüheinrichtung für Reinigungsflüssigkeit innerhalb der Trommel 110 in der Nachbarschaft der Sprüheinrichtung zum Beschichten der Grundkörper angeordnet. Die Entladeeinrichtung 130 enthält standardmäßig eine trichterförmige Wanne 131, wobei unterhalb der trichterförmigen Wanne 131 ein Transportband für einen steuerbaren Abtransport der Grundkörper enthält.

Gemäß einer weiteren allgemein vorteilhaften Bauform der erfindungsgemäßen Vorrichtung ist Trommel 110 im Wesentlichen zylindrisch bzw. polygonal ausgeführt, wobei ihre Öffnung im Bereich ihrer Mantelfläche vorgesehen ist. Die Mantelfläche ist des weiteren mit einer Mehrzahl von in regelmäßigen Abständen angeordneten Bohrungen zum Einströmen von Luft in die Trommel versehen, zum sukzessiven Trocknen von der Sprüheinrichtung versprühter und an der Oberfläche der Grundkörper angelagerter Beschichtungsflüssigkeit.

Das oben erläuterte Ausführungsbeispiel der Erfindung dient lediglich dem Zweck eines besseren Verständnisses der durch die Ansprüche definierten erfindungsgemäßen Lehre, die als solche durch das Ausführungsbeispiel nicht eingeschränkt ist.

## Patentansprüche

1. Beschichtungs-Vorrichtung zum Beschichten beispielsweise linsen- oder kornförmiger Grundkörper, mit einer um eine horizontale Achse drehbar gelagerten Trommel zur Aufnahme der Grundkörper während eines Beladungsvorgangs, einer Beschickungseinrichtung zum Einfüllen der Grundkörper in die Trommel, einer verschließbaren Öffnung der Trommel zur Aufnahme der unbeschichteten Grundkörper in die Trommel und zur Abgabe der fertig beschichteten Grundkörper aus der Trommel sowie einer innerhalb der Trommel angeordneten Sprüheinrichtung zum Beschichten der Grundkörper, wobei unterhalb der Trommel eine Entladeeinrichtung zum Abtransport der fertig beschichteten Grundkörper vorgesehen ist, wobei zwischen der Entladeeinrichtung und der Trommel eine reziprozierbar angeordnete Abschirmwand vorgesehen ist, die aus einer die Entladeeinrichtung abschirmenden ersten Position in eine die Entladeeinrichtung freigebende zweite Position und zurück bewegbar ist, **dadurch gekennzeichnet, dass** die Abschirmwand als Teil eines Zylindermantels ausgebildet ist und der Radius des Zylindermantels so bemessen ist, dass die Abschirmwand die Trommel in möglichst geringem Abstand umschließt, wobei die Abschirmwand zum Zweck einer Führung mit mindestens einer rollengelagerten Führungsschiene fest verbunden ist.

2. Vorrichtung nach Anspruch 1, **dadurch gekennzeichnet, dass** die Abschirmwand an ihren gebogenen Enden jeweils mit Ansatzstirnflächen versehen ist.

3. Vorrichtung nach einem der vorhergehenden Ansprüche, **dadurch gekennzeichnet, dass** die mindestens eine Führungsschiene so lang bemessen ist, dass die Abschirmwand um etwa 90° schwenkbar ist.

4. Vorrichtung nach einem der vorhergehenden Ansprüche, **dadurch gekennzeichnet, dass** zwei Führungsschienen vorgesehen sind.

5. Vorrichtung nach Anspruch 4, **dadurch gekennzeichnet, dass** die Führungsschienen mit den Ansatzstirnflächen der Abschirmwand verbunden sind.

6. Vorrichtung nach einem der vorhergehenden Ansprüche, **dadurch gekennzeichnet, dass** mindestens ein Rollenlager zum reziprozierbaren geführten Verschieben der Führungsschienen der Abschirmwand an der Entladeeinrichtung befestigt ist.

7. Vorrichtung nach Anspruch 6, **dadurch gekennzeichnet, dass** die mindestens eine Führungsschiene im Querschnitt rund ausgebildet ist, wobei die Rollen eines Rollenlagers im Querschnitt konkav ausgebildet sind.

8. Vorrichtung nach einem der einem der vorhergehenden Ansprüche, **dadurch gekennzeichnet, dass** die Abschirmwand zum Zweck eines Antriebes für eine reziprozierbare Verschiebung mit einer gebogenen Zahnstange verbunden ist, die mit einem motorgetriebenen Zahnrad zusammenwirkt.

9. Vorrichtung nach Anspruch 8, **dadurch gekennzeichnet, dass** die gebogene Zahnstange mit der Außenfläche des Zylindermantels verbunden ist.

10. Vorrichtung nach einem der Ansprüche 8 oder 9, **dadurch gekennzeichnet, dass** das Zahnrad an der Entladeeinrichtung befestigt ist.

11. Vorrichtung nach einem der einem der vorhergehenden Ansprüche, **dadurch gekennzeichnet, dass** die Sprüheinrichtung für Reinigungsflüssigkeit in der Nachbarschaft der Sprüheinrichtung zum Beschichten der Grundkörper angeordnet ist.

12. Vorrichtung nach einem der einem der vorhergehenden Ansprüche, **dadurch gekennzeichnet, dass** die Entladeeinrichtung eine trichterförmige Wanne enthält

13. Vorrichtung nach Anspruch 12, **dadurch gekennzeichnet, dass** die Entladeinrichtung unterhalb der trichterförmigen Wanne ein Transportband für einen steuerbaren Abtransport der Grundkörper enthält.

14. Vorrichtung nach einem der einem der vorhergehenden Ansprüche, **dadurch gekennzeichnet, dass** eine Mehrzahl iterativer Beschichtungsvorgänge mit jeweils unterschiedlichen Beschichtungsmaterialien sukzessiv hintereinander vornehmbar sind.

## Claims

1. A coating device for coating, for example, lenticular or granular items, comprising a drum rotatably mounted about a horizontal axis for accommodation of the items during a coating process, a loading device for filling the items into the drum, a closeable opening in the drum for admission of the uncoated items into the same and for allowing discharge of the coated items from the same, and a spraying device disposed within the drum for coating said items, an unloading device being provided beneath said drum for removing the coated items, whilst between said unloading device and said drum there is provided a reciprocatory screening element which can be moved back and forth between a first position screening off said unloading device to a second position opening said unloading device, **characterized in that** said screening element is part of a cylinder barrel, the radius of the cylinder barrel being dimensioned such that the screening element surrounds the drum with the smallest possible gap therebetween, wherein the screening element is fixed, for guiding purposes, to at least one roller-mounted guide rail.

2. A device as defined in Claim 1, **characterized in that** said screening element has front abutment faces at each of its curved ends.

3. A device as defined in either of the previous claims, **characterized in that** said at least one guide rail is dimensioned to have a length such that said screening element can be swung through approximately 90 degrees.

4. A device as defined in any one of the previous claims, **characterized in that** two guide rails are provided.

5. A device as defined in claim 4, **characterized in that** one of said guide rails is connected to said front abutment surfaces of said screening element.

6. A device as defined in any one of the previous claims, **characterized in that** at least one roller bearing is fixed to said unloading device to enable reciprocatory displacement of said guide rails of said screening element.

7. A device as defined in claim 6, **characterized in that** the at least one guide rail is of round cross-section, the rollers of a roller bearing being concave in cross-section.

8. A device as defined in any one of the previous claims, **characterized in that**, for the purpose of affording drive means for reciprocatory displacement, said screening element is connected to an arcuate toothed rack which cooperates with a motor-driven pinion.

9. A device as defined in claim 8, **characterized in that** said arcuate toothed rack is attached to the outer surface of said cylinder barrel.

10. A device as defined in claim 8 or claim 9, **characterized in that** said pinion is attached to said unloading device.

11. A device as defined in any one of the previous claims, **characterized in that** the spraying device for the cleaning liquid is disposed in the vicinity of the spraying device used for coating the items.

12. A device as defined in any one of the previous claims, **characterized in that** said unloading device includes a funnel-shaped trough.

13. A device as defined in Claim 12, **characterized in that** the discharging device beneath said funnel-shaped trough contains a conveyor belt for the removal of the items in a controlled manner.

14. A device as defined in any one of the previous claims, **characterized in that** a plurality of iterative coating processes can be carried out successively using different coating materials in each case.

## Revendications

1. Installation de couchage pour le couchage des corps de base lenticulaires ou granulaires par exemple, comportant un tambour supporté de façon tournant autour d'un axe horizontale et recevant les corps de base pendant une opération de chargement, un dispositif de chargement pour remplir le tambour des corps de base, une ouverture fermant du tambour pour recevoir les corps de base non enduits d'une couche dans le tambour et pour enlever les corps de base enduits d'une couche du tambour, et comportant un dispositif d'arrosage disposé à l'intérieur du tambour pour le couchage des corps de base, un dispositif de décharge pour l'évacuation des corps de base enduits d'une couche étant prévu au-dessous du tambour, une paroi de blindage disposée de façon réversible étant prévue entre le dispositif de décharge et le tambour et pouvant être déplacée d'une première position de blindage du dispositif de décharge à une deuxième position de libération du dispositif de décharge et vice versa,
**caractérisée en ce que** la paroi de blindage est réalisée en forme d'un corps cylindrique partiel et le rayon du corps cylindrique partiel est dimensionné de façon à ce que la paroi de blindage renferme le tambour à une distance minimale, la paroi de blindage étant solidarisée d'au moins une glissière de guidage montée sur des rouleaux.

2. Installation selon la revendication 1,
**caractérisée en ce que** la paroi de blindage présente sur ses extrémités courbées des surfaces frontales rapportées respectives.

3. Installation selon l'une des revendications préalables,
**caractérisée en ce que** la au moins une glissière de guidage est dimensionnée à une longueur telle que la paroi de blindage peut pivoter d'environ 90°.

4. Installation selon l'une des revendications préalables,
**caractérisée en ce que** deux glissières de guidage sont prévues.

5. Installation selon la revendication 4,
**caractérisée en ce que** les glissières de guidage sont reliées aux surfaces frontales rapportées de la paroi de blindage.

6. Installation selon l'une des revendications préalables,
**caractérisée en ce que** au moins un roulement à rouleaux servant au déplacement guidé réversible des glissières de guidage de la paroi de blindage est fixé sur le dispositif de décharge.

7. Installation selon la revendication 6,
**caractérisée en ce que** la au moins une glissière de guidage est formée à section ronde, les rouleaux d'un roulement à rouleaux étant formés à section concave.

8. Installation selon l'une des revendications préalables,
**caractérisée en ce que** la paroi de blindage est reliée à une crémaillère courbée coopérant avec une roue dentée entraînée par un moteur, aux fins d'entraînement pour un déplacement réversible.

9. Installation selon la revendication 8,
**caractérisée en ce que** la crémaillère courbée est reliée à la surface extérieure du corps cylindrique partiel.

10. Installation selon l'une des revendications 8 ou 9,
**caractérisée en ce que** la roue dentée est fixée sur le dispositif de décharge.

11. Installation selon l'une des revendications préalables,
**caractérisée en ce que** le dispositif d'arrosage destiné au liquide de nettoyage est disposé au voisinage du dispositif d'arrosage destiné au couchage des corps de base.

12. Installation selon l'une des revendications préalables,
**caractérisée en ce que** le dispositif de décharge comprend une cuve en entonnoir.

13. Installation selon la revendication 12,
**caractérisée en ce que** le dispositif de décharge comprend une bande transporteuse destinée à l'évacuation contrôlée des corps de base, disposée au-dessous de cette cuve en entonnoir.

14. Installation selon l'une des revendications préalables,
**caractérisée en ce qu'**elle permet d'effectuer successivement, l'un après l'autre, plusieurs opérations de couchage itératives en utilisant des matières de couchage différentes respectives.
